# EUROPEAN PATENT SPECIFICATION

(11) **EP 1 150 449 B1**
(45) Date of publication and mention of the grant of the patent: **19.09.2007**
(21) Application number: 00201458.7
(22) Date of filing: 25.04.2000
(51) Int. Cl.: H04L 1/08, G08G 1/09, H04H 1/00

(54) **A method and apparatus for reducing data communication in an RDS TMC message environment**
Verfahren und Einrichtung zur Reduzierung der Datenkommunikation in einem RDS TMC System
Méthode et dispositif pour réduire le flux de communication dans un environnement RDS TMC

(43) Date of publication of application: 31.10.2001
(73) Proprietor: SIEMENS AKTIENGESELLSCHAFT, 80333 München (DE)
(72) Inventor: Völkel, Andreas, 35576 Braunfels (DE)

(56) References cited:
- US-A- 4 277 838
- US-A- 5 426 653
- US-A- 5 694 438
- US-A- 5 805 980

## Description

The invention generally relates to the receiving of messages in a Radio Data System Traffic Message Coding message environment. The messages are broadcast through various geographically distributed transmitter stations and may contain various information items to inform vehicles and their drivers within the transmission reach, of certain traffic conditions and related data that may be relevant for those receiver entities. A particular message format may contain an event (11 bits), a location (16 bits), a direction (1 bit), an extent *(*3 bits), a duration (3 bits), and a diversion advice (1 bit), or 35 bits in total. To raise the probability for correct reception, each message in the present embodiment is repeated three times in immediate succession. Furthermore, at any time a particular transmitter may present a cyclus of various different messages which cyclus will be repeated as long as no change is required for the overall information. Inasmuch as the geographical area for which a particular message could be relevant will often outstretch the area that a particular transmitter may reach, the same message may be transmitted by many stations in parallel. However, there is no synchronization between the various transmitters, nor between a particular transmitter and a particular receiver, inasmuch as a receiver may dynamically switch between various stations, such as when seeking best reception quality. For brevity, error protectivity contained in the message packet and the coding of the rank between the mutually corresponding and repeated messages within a single cycle will hereinafter be considered state of the art.

Now in particular, the invention relates to a method for processing a cyclus of messages wherein each message is consecutively repeated several times as a subsequence of that cyclus, the method comprising the steps of: receiving a message and checking for correctness thereof; forwarding the correct message for further processing; after said checking comparing the most recent message with its direct predecessor and upon correspondence therebetween forwarding the predecessor accompanied by a validation signal when detecting that the predecessor was the first correct message of its actual subsequence.

US 4,277,838 discovers a data receiving apparatus for receiving repetitively transmitted blocks of data. The data receiving apparatus stores data in a register. By a comparator each received byte in input data is compared with the corresponding stored byte. If the corresponding bytes match, either byte is selected for storage and a validation bit for that byte is set in the register. If the corresponding bytes do not match, the new byte is selected for storage if the validation bit is set and the old, stored byte is selected for storage if the validation bit is not set, and the validation bit for that byte in the register is reset.

As may be gathered from the above, the messages are being received continually, but many thereof may in fact be received in a defective manner, and should in consequence be discarded immediately without even considering the relevance of their information content. This discarding may well be effected by the overall navigation processor itself. However, this poses a large temporal burden on its precious processing time that could better be assigned to more complex tasks. Also, the transfer mechanism between the TMC receiver proper and the processor should be relieved from transferring data items that might have been discarded.

In consequence, amongst other things, it is an object of the present invention to provide a short-time discarding mechanism at an early stage of the RDS TMC processing, to thereby free high power processing and transfer facilities for other tasks that expressly need these facilities.

Now therefore, according to one of its aspects the invention is characterized by the step of: forgoing said forwarding when detecting that the predecessor was not the first correct message of its actual subsequence.

The invention also relates to an apparatus being arranged for implementing a method as claimed in Claim 1. Further advantageous aspects of the invention are recited in dependent Claims.

These and further aspects and advantages of the invention will be discussed more in detail hereinafter with reference to the disclosure of preferred embodiments, and in particular with reference to the appended Figures that show:
Figure 1, a block diagram of an apparatus according to the invention;
Figure 2, examples of optimum reception;
Figure 3, examples of disturbed reception;
Figure 4, a flow chart of a preferred embodiment.

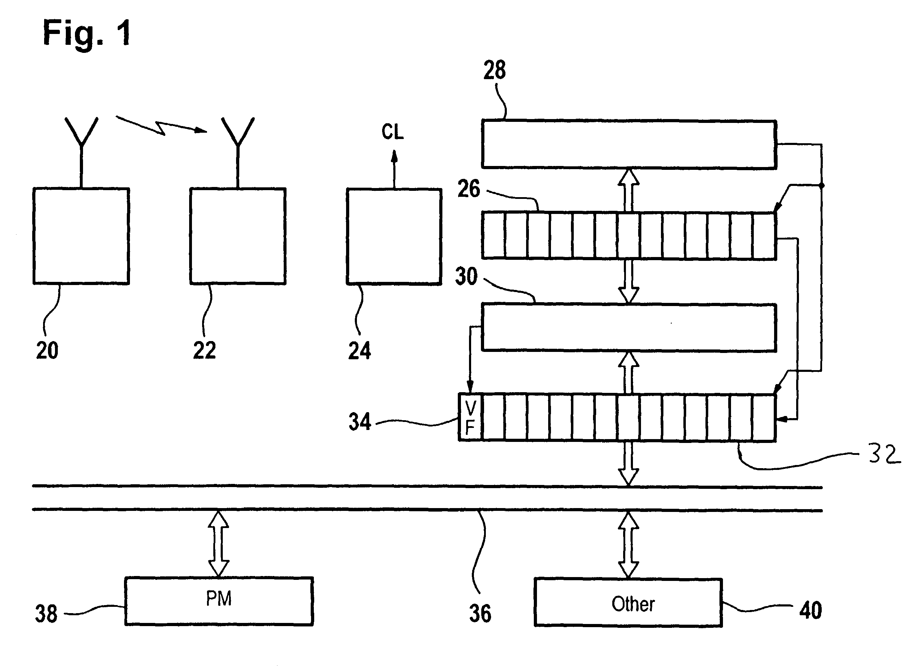

Figure 1 represents a block diagram of an apparatus according to the invention. The RDS TMC broadcast station 20 transmits message cycli as considered hereabove. Receiver 22 tunes in on a correct transmission band, and block 24 through synchronizing and thresholding converts the incoming signal into a bitstream and into a clock sequence CL that clocks all subsequent processing along interconnections not shown. The bitstream is sequentially loaded into a buffering arrangement that comprises items 26, 28, 30, 32, 34 to be discussed infra. Bus means 36 link the buffer arrangement to Processor Module 38 and OTHER modules 40 such as sensors, GPS, data base and (user) I/O mechanisms. The processor module may figure out the best itinerary to follow and furthermore find other information to either present to a user or to immediately control the vehicle.

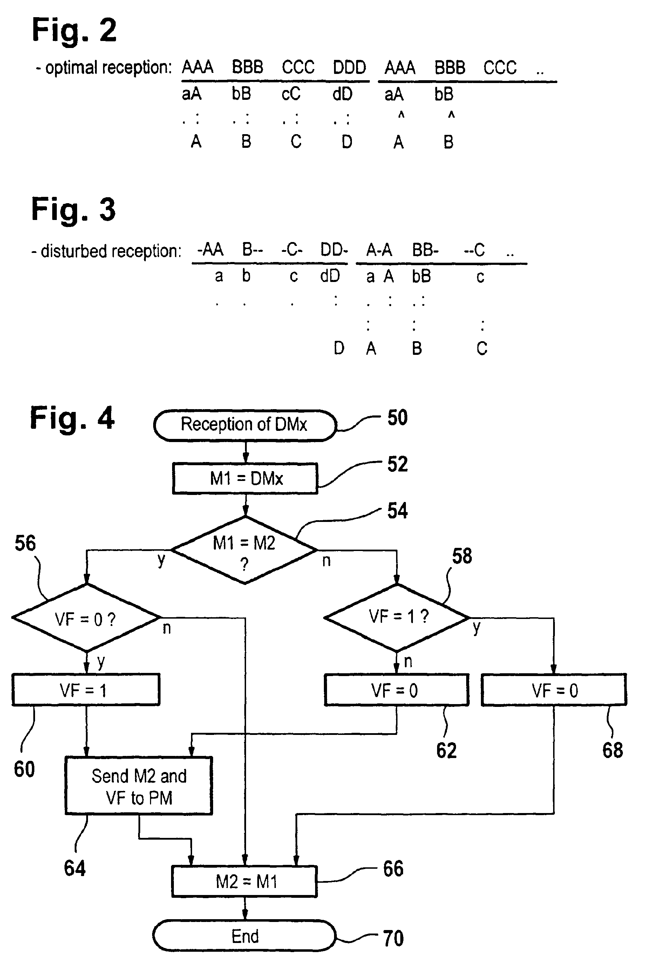

Now in the particular embodiment, the receiver has been provided with two small buffers 26, 32 that each are only sufficiently large to store the bitstring of one atomic data message (DM) such as A (note that the four messages A-D of Figure 2 have intrinsically the same length). Buffer 32 can store a validation flag VF in stage 34. In particular, Figure 4 is a flow chart of a preferred embodiment. Now, upon reception of a first data message (50, 52), it is stored in buffer 26. In the embodiment, the buffer is a bit-clocked shift register and the actual storage instant is detected through detecting mechanism 28 that synchronizes on the level of the overall message, and allows to subsequently discard header, error protectivity, and similar synchronization bits. Upon subsequent reception of a next data message, detecting mechanism 28 will know when to expect the data bits proper through its flywheel mechanism, and will in consequence shift the content of buffer 26 into buffer 32 and simultaneously therewith, the new message into buffer 26 (52). Comparator 30 then will check (54) for the identity of the data content of the two buffers 26 and 32. Equality with the validation flag (34) at 0 (56) will set it to 1 (60), which represents a bus transfer request signal, causing the content of buffer 32 to be transferred to the memory of processor 38, together with the associated validation flag 34 (64). If the two messages differ (58), with the validation flag already at "1", the flag will be reset to "0", so the bus transfer will not be requested and the validation flag remains at zero (68). In the embodiment, the apparatus has two buffers of a shift register type. Persons skilled in the art will recognize that a corresponding configuration may be attained through buffers that have an input demultiplexer facility and an output multiplexer facility. The configuration of the storing and setting/resetting of the flags would then need some straightforward adaptation. Likewise, instead of serial load/unload and shift register technology, the invention may be effected through parallel load/unload of the buffer registers.

Upon receiving a next-following message (A or B), the content of buffer 26 is again transferred to buffer 32, while the new message is stored in buffer 26. If the two messages are equal again, but the validation flag's "1" indicates that the earlier version had already been transferred to the processor, the new one would undergo no such transfer, and the validation flag is reset to "0". In consequence, the transfer will be forgone, which at this level would save a bus transfer of a datum that would not generally be useful.

If the two buffers have non-identical contents (58), and the validation flag is zero (62), the content of buffer 32 is sent to the processor, inasmuch as it is the first occurrence of that message in the actual cycle. For this reason, the actually "0" validation flag is combined with the identity signal from comparator 30 to produce a bus request signal, which has not been detailed in Figure 1 for brevity. At the end of the procedure, for each sub-sequence received, the latest version of its message will be shifted towards buffer 32 (66, 70).

Repeating: If A is marked with VF=0 then A together with VF=0 is transmitted to PM for storage therein. The next message B will be stored in 32. If the third message is B, then B in 32 will get VF=1. If the third message is ≠B (e.g. this message is A or C), then B in buffer 32 will get VF=0.

Suppose that the third message=A, then at reception of the fourth message, A will be shifted to buffer 32. If then the fourth message will be A, again the message A in buffer 32 will get VF=1, followed by a transfer of A with VF=1 to the processor (same as upon the second message supra). If the fourth message is not equal to A, then A in buffer 32 will get VF=0 and this VF=0 will be passed to the processor at the reception of the fifth message. When this happens, then in the processor the already stored message A (with a VF=0) will get an amended verification flag VF=1. In conclusion, the two buffers will deal with short time verification, whereas the processor module will see to long-term validation. The procedure improves reliability whilst using only little processing power and storage capacity.

Figure 2 shows examples of optimum reception of a cyclus of four messages A, B, C, D, that are each transmitted three times in immediate subsequence succession such as shown by AAA, whereafter the whole cyclus is repeated. For brevity, synchronization information, cyclus headers, error protectivity information, and various further items that operate on the level of the transmission layer are ignored. Generally, optimum reception means that each message taken separately, will have the correct content after decoding. The first message of a threesome has therefore been indicated in the second line by a small letter of corresponding identity such as **a, b,** etcetera. Upon decoding of the second message of a threesome, exactly the same results as from the first message, which has been indicated by the capital letter of the same identity: **A, B,** etcetera. At that instant, the message may be transferred to the main processing for further consideration. In the example of Figure 2, this has been shown as being the message ***second*** in the second buffer, as indicated through the ***two*** dots above each other. After the first cyclus has completed, the process continues as indicated by the "Λ" symbol.

Further to the above, Figure 3 shows various examples of disturbed reception. Of the first threesome, the first message is not received at all, the second only incorrectly, and the third possibly correctly (a). This means that the comparison will never yield equality and no message is forwarded from buffer 26 where it would ultimately reside, indicate by a single dot. Of the second threesome, only the first one is found presumably correctly, but inasmuch as the actual verification flag stood at zero, nothing will be sent. The same will be the case for the third threesome, of which again only one is received correctly .The fourth threesome produces two correct receptions of directly successive messages, so that the second reception produces a transfer from buffer 32 (shown as two dots). The third version of this message is again a failure, so that the storage condition does not change. Starting with the A messages again, the first is immediately successful.

## Claims

1. A method for processing a cyclus of messages wherein each message is consecutively repeated several times as a subsequence of that cyclus, the method comprising the steps of:
receiving a message (50, 52) and checking for correctness thereof; and forwarding the correct message for further processing; wherein said forwarding is conditionally carried out by
after said checking comparing the most recent message with its direct predecessor (54) and upon correspondence therebetween forwarding the predecessor accompanied by a validation signal (64) when detecting (56y) that the predecessor was the first correct message of its actual subsequence;
whereas
forgoing said forwarding when detecting (56n) that the predecessor was not the first correct message of its actual subsequence.

2. A method for processing a cyclus of messages wherein each message is consecutively repeated several times as a subsequence of that cyclus, the method comprising the steps of:
receiving a message (50, 52) and checking for correctness thereof; and forwarding the correct message for further processing; wherein said forwarding is conditionally carried out by
after said checking comparing the most recent message with its direct predecessor (54) and upon non-correspondence therebetween forwarding the predecessor accompanied by a non-validation signal (64) when detecting (58n) that the predecessor was the only correct message of its actual subsequence;
whereas
forgoing said forwarding when detecting (58y) that the predecessor was a non-first correct message of its actual subsequence.

3. An apparatus being arranged for implementing a method as claimed in Claim 1 for processing a cyclus of messages wherein each message is consecutively repeated several times as a subsequence of that cyclus, the apparatus comprising:
receiving means for receiving a message and checking correctness thereof;
forwarding means for forwarding the correct message for further processing;
comparing means (30) controlled by said checking means for comparing the most recent message with its direct predecessor and having correspondence signalling means to control said forwarding means for forwarding the predecessor accompanied by a validation signal when detecting (56y) that the predecessor was the first correct message of its actual subsequence;
whereas
said forwarding means are kept inactive when detecting (56n) that the predecessor was not the first correct message of its actual subsequence.

4. An apparatus being arranged for implementing a method as claimed in Claim 2 for processing a cyclus of messages wherein each message is consecutively repeated several times as a subsequence of that cyclus, the apparatus comprising:
receiving means for receiving a message and checking correctness thereof;
forwarding means for forwarding the correct message for further processing;
comparing means (30) controlled by said checking means for comparing the most recent message with its direct predecessor and having non-correspondence signalling means to control said forwarding means for forwarding the predecessor accompanied by a non-validation signal when detecting (58n) that the predecessor was the only correct message of its actual subsequence;
whereas
said forwarding means are kept inactive when detecting (58y) that the predecessor was a non-first correct message of its actual subsequence.

## Patentansprüche

1. Verfahren zur Verarbeitung eines Zyklus von Nachrichten, wobei jede Nachricht mehrmals hintereinander als Teilfolge dieses Zyklus wiederholt wird, welches Verfahren folgende Schritte aufweist:
Empfangen einer Nachricht (50, 52) und Prüfen derselben auf Korrektheit; und Weiterleiten der korrekten Nachricht zur Weiterverarbeitung; wobei das Weiterleiten bedingt ausgeführt wird durch
nach dem Prüfen Vergleichen der letzten Nachricht mit ihrem unmittelbaren Vorgänger (54) und bei Übereinstimmung der beiden Nachrichten Weiterleiten des Vorgängers, begleitet von einem Validierungssignal (64), wenn entdeckt (56y) wird, dass der Vorgänger die erste korrekte Nachricht ihrer tatsächlichen Teilfolge war;
wohingegen das Weiterleiten ausgelassen wird, wenn entdeckt (56n) wird, dass der Vorgänger nicht die erste korrekte Nachricht ihrer tatsächlichen Teilfolge war.

2. Verfahren zur Verarbeitung eines Zyklus von Nachrichten, wobei jede Nachricht mehrmals hintereinander als Teilfolge dieses Zyklus wiederholt wird, welches Verfahren folgende Schritte aufweist:
Empfangen einer Nachricht (50, 52) und Prüfen derselben auf Korrektheit; und Weiterleiten der korrekten Nachricht zur Weiterverarbeitung; wobei das Weiterleiten bedingt ausgeführt wird durch
nach dem Prüfen Vergleichen der letzten Nachricht mit ihrem unmittelbaren Vorgänger (54) und bei Nicht-Übereinstimmung der beiden Nachrichten Weiterleiten des Vorgängers, begleitet von einem Nicht-Validierungssignal (64), wenn entdeckt (58n) wird, dass der Vorgänger die einzige korrekte Nachricht ihrer tatsächlichen Teilfolge war;
wohingegen das Weiterleiten ausgelassen wird, wenn entdeckt (58y) wird, dass der Vorgänger eine nicht-erste korrekte Nachricht ihrer tatsächlichen Teilfolge war.

3. Vorrichtung, die dem Zweck der Implementierung eines Verfahrens nach Anspruch 1 zur Verarbeitung eines Zyklus von Nachrichten dient, wobei jede Nachricht mehrmals hintereinander als Teilfolge dieses Zyklus wiederholt wird, welche Vorrichtung aufweist:
Empfangsmittel zum Empfangen einer Nachricht und Prüfen derselben auf Korrektheit;
Weiterleitungsmittel zum Weiterleiten der korrekten Nachricht zur Weiterverarbeitung;
von den Prüfungsmitteln gesteuerte Vergleichsmittel (30) zum Vergleichen der letzten Nachricht mit ihrem unmittelbaren Vorgänger und mit Übereinstimmungssignalisierungs-Mitteln zum Steuern der Weiterleitungsmittel zur Weiterleitung des Vorgängers, begleitet von einem Validierungssignal, wenn entdeckt (56y) wird, dass der Vorgänger die erste korrekte Nachricht ihrer tatsächlichen Teilfolge war;
wohingegen die Weiterleitungsmittel inaktiv gehalten werden, wenn entdeckt (56n) wird, dass der Vorgänger nicht die erste korrekte Nachricht ihrer tatsächlichen Teilfolge war.

4. Vorrichtung, die dem Zweck der Implementierung eines Verfahrens nach Anspruch 2 zur Verarbeitung eines Zyklus von Nachrichten dient, wobei jede Nachricht mehrmals hintereinander als Teilfolge dieses Zyklus wiederholt wird, welche Vorrichtung aufweist:
Empfangsmittel zum Empfangen einer Nachricht und Prüfen derselben auf Korrektheit;
Weiterleitungsmittel zum Weiterleiten der korrekten Nachricht zur Weiterverarbeitung;
von den Prüfungsmitteln gesteuerte Vergleichsmittel (30) zum Vergleichen der letzten Nachricht mit ihrem unmittelbaren Vorgänger und mit Nicht-Übereinstimmungssignalisierungs-Mitteln zum Steuern der Weiterleitungsmittel zur Weiterleitung des Vorgängers, begleitet von einem Nicht-Validierungssignal, wenn entdeckt (58n) wird, dass der Vorgänger die einzige korrekte Nachricht ihrer tatsächlichen Teilfolge war;
wohingegen die Weiterleitungsmittel inaktiv gehalten werden, wenn entdeckt (58y) wird, dass der Vorgänger eine nicht-erste korrekte Nachricht ihrer tatsächlichen Teilfolge war.

## Revendications

1. Procédé pour le traitement d'un cycle de messages dans lequel chaque message est répété de manière consécutive plusieurs fois à une sous-séquence de ce cycle, le procédé comprenant les étapes de :
recevoir un message (50, 52) et vérifier qu'il est correct ; et envoyer le message correct en vue d'une poursuite du traitement; dans lequel ledit envoi est effectué de manière conditionnelle par les faits de,
après ladite vérification, comparer le message le plus récent avec son prédécesseur direct (54) et en cas de correspondance entre ceux-ci, envoyer le prédécesseur accompagné d'un signal de validation (64) si l'on détecte (56y) que le prédécesseur était le premier message correct de sa sous-séquence actuelle ;
sinon
renoncer au dit envoi si l'on détecte (56n) que le prédécesseur n'était pas le premier message correct de sa sous-séquence actuelle.

2. Procédé pour le traitement d'un cycle de messages dans lequel chaque message est répété de manière consécutive plusieurs fois comme une sous-séquence de ce cycle, le procédé comprenant les étapes de:
recevoir un message (50, 52) et vérifier qu'il est correct ; et envoyer le message correct en vue d'une poursuite du traitement;
dans lequel ledit envoi est effectué de manière conditionnelle par les faits de,
après ladite vérification, comparer le message le plus récent avec son prédécesseur direct (54) et en cas de la non-correspondance entre ceux-ci, envoyer le prédécesseur accompagné d'un message de non-validation (64) si l'on détecte (58n) que le prédécesseur était le seul message correct de sa sous-séquence actuelle ;
sinon
renoncer au dit envoi si l'on détecte (58y) que le prédécesseur était un message correct non-initial de sa sous-séquence actuelle.

3. Appareil qui est conçu pour implémenter un procédé selon la revendication 1 pour le traitement d'un cycle de messages dans lequel chaque message est répété de manière consécutive plusieurs fois comme une sous-séquence de ce cycle, l'appareil comprenant :
des moyens de réception pour la réception d'un message et la vérification qu'il est correct ;
des moyens d'envoi pour envoyer le message correct en vue d'une poursuite du traitement ;
des moyens de vérification (30) commandés par lesdits moyens de vérification pour comparer le message le plus récent avec son prédécesseur direct et ayant un moyen de signalisation de correspondance pour commander audit moyen d'envoi d'envoyer le prédécesseur accompagné d'un signal de validation si l'on détecte (56y) que le prédécesseur était le premier message correct de sa sous-séquence actuelle;
tandis que :
lesdits moyens d'envoi sont maintenus inactifs ;
si l'on détecte (56n) que le prédécesseur n'était pas le premier message correct de sa sous-séquence actuelle.

4. Appareil qui est conçu pour implémenter un procédé selon la revendication 2 pour le traitement d'un cycle de messages dans lequel chaque message est répété de manière consécutive plusieurs fois comme une suite de ce cycle, l'appareil comprenant :
des moyens de réception pour recevoir un message et pour vérifier qu'il est correct ;
des moyens d'envoi pour envoyer le message correct en vue d'une poursuite du traitement ;
des moyens de vérification (30) commandés par lesdits moyens de réception pour comparer le message le plus récent avec son prédécesseur direct et ayant des moyens de signalisation de non-correspondance pour commander auxdits moyens d'envoi d'envoyer le prédécesseur accompagné d'un signal de non-validation ;
si l'on détecte (56n) que le prédécesseur était l'unique message correct de sa sous-séquence actuelle ;
tandis que
lesdits moyens d'envoi sont maintenus inactifs si l'on détecte (58y) que le prédécesseur était un message correct non-initial de sa sous-séquence actuelle.
